# EUROPÄISCHE PATENTSCHRIFT

(11) **EP 2 090 206 B1**
(45) Veröffentlichungstag und Bekanntmachung des Hinweises auf die Patenterteilung: **15.06.2011**
(21) Anmeldenummer: 08002890.5
(22) Anmeldetag: 15.02.2008
(51) Int. Cl.: A47J 37/08, A47B 77/08

(54) **Einbautoaster**
Fitted toaster
Grille-pain intégré

(43) Veröffentlichungstag der Anmeldung: 19.08.2009
(73) Patentinhaber: ritterwerk GmbH, 82194 Gröbenzell (DE)
(72) Erfinder: Braun, Werner, 6062 Wilen-Sarnen (CH); Lapper, Thomas, 82290 Landsberied (DE); Schier, Stefan, 82110 Germering (DE)
(74) Vertreter: HOFFMANN EITLE

(56) Entgegenhaltungen:
- EP-A- 1 213 948
- FR-A- 2 033 672
- US-A1- 2003 155 350

## Beschreibung

### Gebiet der Erfindung

Die vorliegende Erfindung betrifft einen Einbautoaster und insbesondere einen Einbautoaster zum Einbau in einem Schubkasten bzw. einer Schublade.

### Stand der Technik

Ein derartiger Toaster ist aus dem Stand der Technik bisher nicht bekannt. Dokument FR 20 33 672 zeigt in Schubkasten eingebaute Elektrogerräte und Dokument EP 1 213 948 eine Mikrowelle mit einen Einschub für einen Toaster.

### Zusammenfassung der Erfindung

Somit beruht die Aufgabe der vorliegenden Erfindung darin einen Einbautoaster, insbesondere zum Einbau in einem Schubkasten vorzuschlagen, der einfach aufgebaut ist und gut gehandhabt werden kann.

Diese Aufgabe wird erfindungsgemäß durch einen Toaster gelöst, wie er im Patentanspruch 1 definiert ist. Vorteilhafte Ausgestaltungen des erfindungsgemäßen Toasters finden sich in den Unteransprüchen.

Der Erfindung liegt der Gedanke zu Grunde den Toasterkörper flach auszugestalten und derart mit einem Gelenk zu verbinden, dass er aus einer liegenden Position, in der die im Querschnitt langen Seiten horizontal angeordnet sind, in eine stehende Position, in der diese Seiten vertikal angeordnet sind, verschwenkbar ist.

Dementsprechend definiert sich der erfindungsgemäße Toaster derart, dass er einen flachen Körper zum Aufnehmen und Rösten von Lebensmittelsprodukten, insbesondere Brot, z. B. Toastbrot oder ähnlichem, umfasst. Unter einem flachen Körper ist, vorzugsweise ein quaderförmiger Körper zu verstehen, bei dem eine der drei Dimensionen (Breite, Höhe und Tiefe) wesentlich kleiner ist als die anderen beiden. Darüber hinaus umfasst der Begriff "Rösten" auch das einfache Erwärmen von aufgenommenen Lebensmittelprodukten, ohne dass ein Röstvorgang stattfindet. Im Querschnitt weist der flache Körper zwei gegenüberliegende lange Seiten und zwei gegenüberliegende kurze Seiten auf, wobei die kurzen Seiten der kleinsten der drei Dimensionen entsprechen. Um den Körper aus seiner liegenden Position (Stauposition) in eine stehende Position (Betriebsposition) verschwenken zu können, weist der erfindungsgemäße Einbautoaster ferner ein Gelenk auf. Dieses Gelenk hat eine Verbindungsstelle, die es ermöglicht den Einbautoaster, z. B. in einem Schubkasten, zu montieren bzw. einzubauen. Dabei erfolgt die Verbindung vorzugsweise derart, dass sie manuell, vorzugsweise ohne Werkzeug, gelöst werden kann, um den Toaster insbesondere zu Reinigungszwecken aus dem Schubkasten entnehmen zu können. Darüber hinaus ist das Gelenk erfindungsgemäß derart mit dem Körper verbunden, dass der Körper zwischen der liegenden Position und der stehenden Position verschwenkt werden kann. In der liegenden Position ist eine der langen Seiten der Verbindungsstelle des Gelenks zugewandt, d. h. im eingebauten Zustand verlaufen die langen Seiten horizontal und die kurzen Seiten verlaufen vertikal. In der stehenden Position hingegen ist eine der kurzen Seiten der Verbindungsstelle des Gelenks zugewandt, d. h. im eingebauten Zustand verlaufen die kurzen Seiten horizontal und die langen Seiten vertikal. Vorzugsweise sind zwei solche Gelenke vorgesehen, die jeweils an gegenüberliegenden Seiten des Körpers befestigt sind. Durch diese erfindungsgemäße Ausgestaltung wird ein einfachst aufgebauter Toaster geschaffen, der gut zu handhaben ist. Ferner ermöglicht diese Ausgestaltung den Körper derart aufzustellen, dass er im eingebauten Zustand in Breitenrichtung des Schubkastens im Wesentlichen mittig in dem Schubkasten steht.

Bevorzugterweise weisen die langen Seiten eine Dimension von < = 200 mm, vorzugsweise von < = 184 mm auf und die kurzen Seiten weisen eine Dimension von < = 75 mm, bevorzugterweise von < = 66 mm auf. Die Gesamthöhe aus Körper und Gelenk in der liegenden Position des Körpers sollte nicht größer als 84 mm, vorzugsweise nicht größer als 75 mm sein. Durch die oben genannten Dimensionierungen wird ein Toaster geschaffen, der universell in nahezu alle gängigen, auf dem Markt erhältlichen Schubkästen, insbesondere von Küchen, passt.

Um zu verhindern, dass bei eingeschobenem Schubkasten und damit in liegender Position befindlichem Körper ein Röstbetrieb stattfinden kann und die damit verbundene Brandgefahr zu eliminieren, umfasst der erfindungsgemäße Einbautoaster vorzugsweise einen Sicherheitsschalter, der nur in der stehenden Position einen Röstbetrieb gestattet. Der Sicherheitsschalter kann dabei z. B. auf der Schwerkraft basieren und z. B. einen Kontaktkäfig und eine Kugel umfassen, wobei die Kugel nur in der stehenden Position des Körpers durch die Schwerkraft derart in den Kontaktkäfig rollt, dass ein Kontakt hergestellt wird. Nur bei vorhandenem Kontakt ist der Röstbetrieb möglich. Es sind jedoch auch andere Sicherheitsschalter denkbar. So könnte beispielsweise das Gelenk in der stehenden Position einen Taster auslösen bzw. betätigen, der dann den Röstbetrieb gestattet.

Herkömmliche Toaster umfassen üblicherweise ein Krumenfach bzw. eine Krumenaufnahme, die in dem Körper aufgenommen ist. Bei dem erfindungsgemäßen Einbautoaster ergibt sich jedoch die Problematik, dass die Krumenaufnahme auch dann entnehmbar sein soll, wenn sich der Körper in der liegenden Position befindet. Insbesondere bei diesem Entnehmen soll ebenso wie bei der Entnahme in der stehenden Position des Körpers verhindert werden, dass Krumen aus der Krumenaufnahme herausfallen. Zum Entnehmen der Krumenaufnahme aus dem Körper ist an einer ersten Seite eine Handhabe vorgesehen. Um ein Herausfallen der Krumen beim Entnehmen der Krumenaufnahme zu verhindern, ist ferner eine Wand vorgesehen, die sich vorzugsweise über die gesamte Breite der Krumenaufnahme von einer der ersten Seite gegenüberliegenden zweiten Seiten und in einem Abstand zu einem Boden in Richtung der ersten Seite erstreckt. Vorzugsweise ist diese Wand mit der zweiten Seite wie auch mit den Seiten verbunden, die die erste und zweite Seite miteinander verbinden. Darüber hinaus ist es bevorzugt, dass diese Wand mit einer zum Boden gerichteten konvexen Krümmung versehen ist, oder aber in Richtung vom Boden weg geneigt ausgestaltet ist. In der liegenden Position wird damit durch die zweite Seite die Wand, den Boden und die die erste und zweite Seite verbindenden Seiten der Krumenaufnahme ein Fach gebildet. Dabei bildet die zweite Seite den Boden des Fachs, wenn die Krumenaufnahme bei liegendem Körper aus dem Körper entnommen wird, so dass die Krumen beim Entnehmen nicht aus der Krumenaufnahme fallen können.

Wie es bereits erwähnt wurde, muss eine Brandgefahr bei eingeschobenem Schubkasten und eingeklapptem Einbaustoaster bzw. Körper verhindert werden. Daher ist es auch notwendig die im Röstbetrieb entstehende Wärme schnellst möglich abzuführen bevor der Körper in die liegende Position verschwenkt und der Schubkasten eingeschoben wird. Es ist dazu besonders bevorzugt in dem Körper wenigstens einen Kühlkanal vorzusehen, vorzugsweise einen Konvektionskühlkanal, der sich in der stehenden Position des Körpers im Wesentlichen vertikal erstreckt, d. h. in einer Richtung von der der Verbindungsstelle zugewandten kurzen Seite zu der gegenüberliegenden kurzen Seite. Während des Röstbetriebs wird die Luft in den Kanälen erwärmt. Warme Luft steigt nach oben, so dass sie in den Kühlkanälen vertikal von der der Verbindungsstelle zugewandten kurzen Seite in Richtung der gegenüberliegenden kurzen Seite strömt. Durch diese Strömung wird von der Seite der der Verbindungsstelle zugewandten kurzen Seite her kalte Luft angesaugt. Zu diesem Zweck umfasst der Kühlkanal einen Lufteinlass im Bereich der der Verbindungsstelle zugewandten kurzen Seite und einen Luftauslass im Bereich der gegenüberliegenden kurzen Seite. Darüber hinaus kann ferner eine Isolierung vorgesehen werden, die vorzugsweise zwischen einer Heizung und der Außenseite des Körpers angeordnet ist. Diese wird vorzugsweise durch ein aufnahmefähiges Trägermedium, z. B. Karton, Baumwolle oder ähnliches gebildet, das mit einer einfachen Salzlösung, z. B. Magnesiumsulfat, getränkt und getrocknet wird und somit ein unbrennbares Formteil bildet.

Wie es bereits eingangs erwähnt wurde ist es bevorzugt, dass der Körper in der stehenden Position im Wesentlichen in Breitenrichtung eines Schubkastens mittig steht und/oder in der stehenden Position ohne zusätzliche Einrichtungen allein durch sein Gewicht und die Ausgestaltung des Gelenks gehalten wird. Zu diesem Zweck ist es besonders bevorzugt das Gelenk derart auszubilden, dass es zwei Gelenkarme umfasst, die einerseits an einer die Verbindungsstelle bildenden Basis und andererseits an dem Körper angelenkt sind. Vorteilhafterweise ist dabei die Anlenkstelle eines ersten Gelenkarms am Körper in der liegenden Position weiter entfernt von der Verbindungsstelle angeordnet als die Anlenkstelle eines zweiten Gelenkarms am Körper und die Anlenkstelle des ersten Gelenkarms am Körper ist in der stehenden Position näher zur Verbindungsstelle angeordnet als die Anlenkstelle des zweiten Gelenkarms am Körper.

Weiter kann es von Vorteil sein, dass die Gelenkarme in der stehenden Position verbunden bzw. gehalten sind und durch Aufbringen einer Kraft in Richtung der liegenden Position voneinander lösbar sind. Diese Verbindung kann beispielsweise und bevorzugterweise durch einen mit einem Gelenkarm verbundenen Magnet und ein mit dem anderen Gelenkarm verbundenes magnetisches Material als Gegenstück erzielt werden. Alternativ kann der andere Gelenkarm auch selbst aus einem magnetischen Material gebildet sein. Es sind jedoch auch andere Verbindungen wie beispielsweise Rastverbindungen denkbar. Dabei ist es auch denkbar, dass das voneinander Lösen der Gelenkarme durch beispielsweise Betätigen eines Hebels erfolgt, der die Verrastung wieder löst.

Darüber hinaus ist es bevorzugt und um das Halten des Körpers in der stehenden Position zu unterstützen an einem der Gelenkarme einen Vorsprung vorzusehen, der in eine in dem anderen Gelenkarm vorgesehene Aussparung greift, wenn sich der Körper in der stehenden Position befindet. Dabei kann beispielsweise im Bereich des Vorsprungs und der Aussparung die Einrichtung zum Verbinden (Magnet und Gegenstück) der Gelenkarme in der stehenden Position des Körpers vorgesehen sein.

Um die Höhe des Einbautoasters in der liegenden Position des Körpers möglichst klein zu halten, ist es weiter bevorzugt, dass der Einbautoaster wenigstens ein Betätigungselement umfasst, bei dem es sich beispielsweise um einen Bräunungsregler zum Einstellen der Röstzeit bzw. des Röstgrads, die Betätigung einer integrierten Brötchenauflage und/oder das Betätigungselement zum Injizieren des Röstvorgangs z. B. Herunterdrücken des Toasts handeln kann. Gemäß dieser Weiterbildung sind das Betätigungselement und vorzugsweise alle Betätigungselemente so in einer Aussparung des Körpers aufgenommen, dass das/die Betätigungselement/-e im Wesentlichen innerhalb der Seiten des Körpers liegen. Mit anderen Worten definieren die Außenflächen des Körpers insgesamt die Außenflächen des Einbautoaster (mit Ausnahme des/der Gelenks/Gelenke).

### Kurze Beschreibung der Zeichnungen

Weitere Merkmale und Vorteile der vorliegenden Erfindung werden aus der Beschreibung einer bevorzugten Ausführungsform ersichtlich. Diese erfolgt unter Bezugnahme auf die begleitenden Zeichnungen, in denen:
Fig. 1 eine perspektivische Ansicht eines erfindungsgemäßen Toasters, bei dem sich der Körper in der liegenden Position befindet, zeigt;
Fig. 2 eine Seitenansicht auf den Toaster aus Fig. 1 mit Sicht auf das Gelenk und eine Seite zeigt;
Fig. 3 eine Seitenansicht auf den Toaster aus Fig. 1 mit Sicht auf das Gelenk und eine Seite zeigt, wobei sich der Körper in der stehenden Position befindet; und
Fig. 4 einen Querschnitt durch den Toaster aus Fig. 1 entlang der Linie 3-3 in Fig. 1, jedoch im stehenden Zustand aus Fig. 3 zeigt.

### Beschreibung einer bevorzugten Ausführungsform

In den verschiedenartigen Ansichten werden gleiche Elemente durch die gleichen Bezugsziffern gekennzeichnet.

Darüber hinaus versteht sich, dass die vorliegende Erfindung nicht auf die beispielhafte dargestellte Ausführungsform begrenzt ist. Insbesondere sind auch andere Ausgestaltungen der Gelenke denkbar. Insbesondere können z. B. Scheren zum Einsatz kommen und/oder Gelenke, bei denen die Gelenkarme durch zwei gelenkig miteinander verbundene Teile gebildet sind und/oder der Körper an einem festen Drehpunkt der Basis angelenkt ist. Dennoch hat sich im Zuge der Entwicklung das im Folgenden beschriebene Gelenk gegenüber den erwähnten Systemen als besonders vorteilhaft erwiesen.

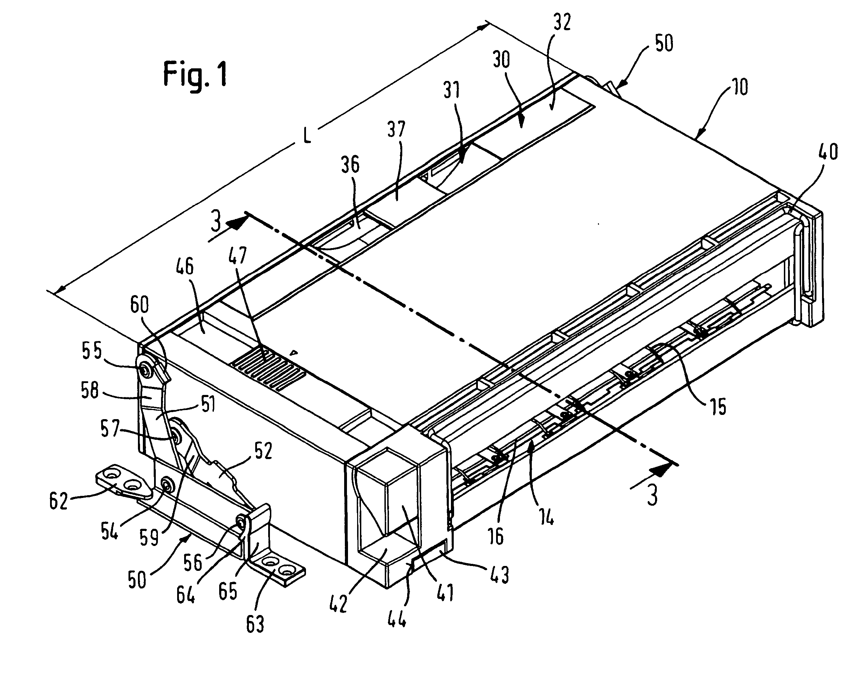

Der in Fig. 1 dargestellte Einbautoaster umfasst einen Körper 10 mit jeweils einem Gelenk 50 an seinen schmalen Seiten.

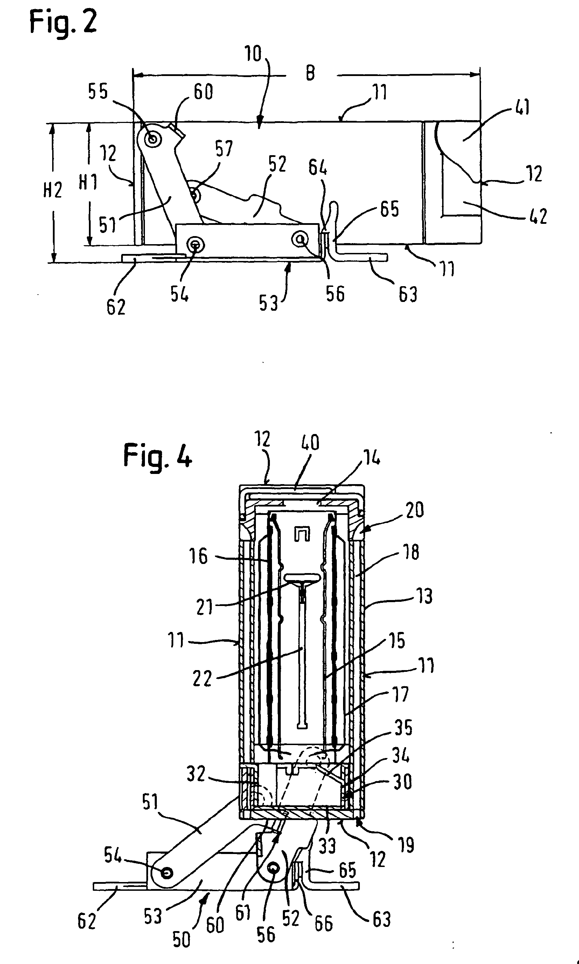

Der Köper 10 ist quaderförmig und weist sechs Seiten auf, wobei sich jeweils zwei Seiten gegenüberliegen. Wie aus dem Querschnitt in Fig. 4 ersichtlich, hat der quaderförmige Körper 10 zwei gegenüberliegende lange Seiten 11 und zwei gegenüberliegende kurze Seiten 12.

Der Körper 10 setzt sich zusammen aus einem Strangpressprofil 13, einem Boden und einem Deckel. Im Bereich des Deckels ist eine Einführöffnung 14 vorgesehen, die es ermöglicht beispielsweise eine oder mehrere Toastbrotscheiben in den Körper 10 bzw. dessen Röstraum einzuführen. In dem Röstraum ist ferner eine Aufnahme 21 vorgesehen, auf der die Toastbrotscheiben aufliegen und die durch ein Betätigungselement 43 zum Starten des Röstvorgangs, entlang einer Kulisse 22 geführt, nach unten bewegt werden kann. Ferner wird der Röstraum beidseits durch Gitter 15 begrenzt, die eine Berührung der Lebensmittelprodukte (Toastbrotscheiben) mit den Heizelementen 16 (Heizung) verhindern. Darüber hinaus ist zwischen einer nach innen gewandten Fläche des Strangpressprofils 13 und den Heizelementen 16 eine Wärmeisolierung 17 vorgesehen, die bei der dargestellten Ausführungsform aus einem aufnahmefähigen Trägermedium gebildet ist, z. B. Karton oder Baumwolle, das mit einer einfachen Salzlösung, hier Magnesiumsulfat, getränkt und getrocknet ist. Somit ist ein Wärme isolierendes unbrennbares Formteil als Wärmeisolierung 17 geschaffen, das einfachst integriert werden kann.

Ferner sind zur weiteren Wärmeabfuhr Kühlkanäle 18 vorgesehen, die sich vorzugsweise über einen Großteil der Länge L des Körpers 10 erstrecken und einen Lufteinlass 19 im Bereich des Bodens und einen Luftauslass 20 im Bereich des Deckels umfassen. Die während des Röstbetriebs die Wärmeisolierung 17 passierende Wärme erwärmt die Luft in den Kühlkanälen 18. Diese steigt entlang der in der stehenden Position vertikal ausgerichteten Kühlkanäle 18 nach oben und verlässt diese durch die Luftauslässe 20. Dadurch wird neue kühlere Luft durch die Lufteinlässe 19 angesaugt, wiederum entwärmt und strömt entlang der Kühlluftkanälen 18 durch die Luftauslässe 20 aus. Dadurch wird die verbleibende Restwärme effektiv abgeführt, ohne dass eine wesentliche Erwärmung der Außenflächen des Körpers 10 erfolgt.

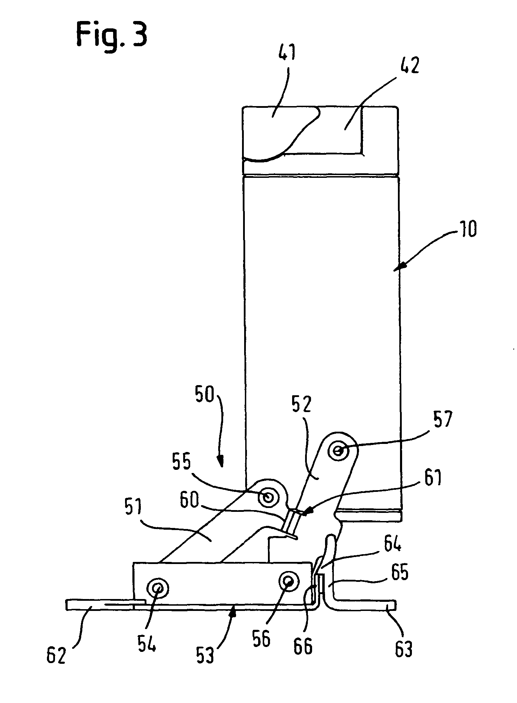

Darüber hinaus weist das Strangpressprofil 13 eine Aussparung auf, in der eine Krumenaufnahme in Form einer Schublade aufgenommen ist. Wie es aus Fig. 1 ersichtlich ist, weist die Krumenaufnahme 30 auf ihrer nach außen gewandten Seite 32 eine Handhabe 31 auf. Diese ist bei der dargestellten Ausführungsform in Form einer Aussparung 36 ausgestaltet, die mittig durch einen Steg 37 unterbrochen ist, so dass durch Greifen des Stegs 37 die Krumenaufnahme 30 aus der Aussparung des Strangpressprofils 13 entnehmbar ist. Im Allgemeinen ist die Krumenaufnahme 30 durch vier Seiten, die erwähnte Seite 32, eine gegenüberliegende Seite 34 und zwei nicht dargestellte die Seiten 32 und 34 verbindende Seiten gebildet. Zwischen diesen Seiten wird ein Raum definiert, der in der in Fig. 3 dargestellten stehenden Position des Körpers 10 nach unten durch einen alle Seiten verbindenden Boden 33 begrenzt ist. Auf diesen fallen im Betrieb Brotkrumen.

In der in Fig. 1 dargestellten liegenden Position gleiten die Krumen beim Verschwenken aus der in Fig. 3 dargestellten stehenden Position in die liegende Position (Fig. 2) entlang des Bodens 33 und sammeln sich auf der Seite 34, die dann den Boden eins weiteren Raums bzw. Fachs bildet. Dieser ist seitlich durch den Boden 33 und eine Wand 35 sowie die die erste Seite 32 und die zweite Seite 34 verbindenden Seiten begrenzt. Die Wand 35 erstreckt sich dabei in einem Abstand vom Boden 33 von der Seite 34 zur Seite 32 hin, wobei sie vom Boden 33 weg in Fig. 4 nach oben geneigt ist. Die Wand 35 erstreckt sich über die gesamte Länge der Krumenaufnahme 30, d. h. sie ist beidseits mit den Wänden, die die Seiten 32 und 34 verbinden, verbunden. Durch die Wand 35 wird ein Herausfallen der Krumen verhindert, wenn die Krumenaufnahme 30 entnommen wird, wenn sich der Körper 10 in der in Fig. 1 dargestellten liegenden Position befindet.

Des Weiteren ist in dem Strangpressprofil 13, das sich aus fertigungstechnischen Gründen als besonders vorteilhaft herausgestellt hat, eine Aussparung 46 vorgesehen, in der ein Betätigungselement 47, hier ein Schieber, zum Einstellen des Bräunungsgrads bzw. Röstgrads geführt ist. Die Oberfläche des Schiebers 47 schließt bündig mit den Oberflächen des Strangpressprofils 13 und damit mit der Oberfläche des Körpers 10 ab, so dass die Oberfläche des Schiebers 47 nicht über die Seiten bzw. Oberflächen des Körpers 10 vorsteht. Für das Element zum Injizieren des Röstvorgangs und nach unten Bewegen der Aufnahme 21 ist ebenfalls eine nicht dargestellte Aussparung in dem Strangpressprofil 13 vorgesehen. Diese setzt sich in den Deckel fort und ist dort in Fig. 1 mit 44 gekennzeichnet. Auch die Oberfläche des Betätigungselements 43 fluchtet mit der Oberfläche des Strangpressprofils 13 bzw. des Deckels, so dass sie nicht über die Seiten bzw. Oberflächen des Körpers 10 hervorsteht. Schließlich weist der Körper 10 eine integrierte Brötchenauflage 40 auf. Diese kann, durch Verschwenken eines Betätigungselements 41, aus einer in Fig. 1 dargestellten Stauposition in eine nicht dargestellte Betriebsposition verschwenkt werden. Auch das Betätigungselement 41 ist in einer Aussparung des Körpers 10, hier des Deckels, so aufgenommen, dass das Betätigungselement 41 nicht über die Seiten bzw. Oberflächen des Körpers 10 hinaussteht.

Dadurch, dass alle Betätigungselemente 41, 43 und 47 derart angeordnet sind, dass sie nicht über die Seitenflächen bzw. Oberflächen des quaderförmigen Körpers 10 hinausstehen, wird ein sehr positives äußeres Erscheinungsbild ohne vorstehende Elemente erzielt und darüber hinaus die Höhe H1 des Körpers 10 (siehe Fig. 2) möglichst gering gehalten.

Diese Höhe H1 liegt vorzugsweise unter 75 mm, am meisten bevorzugt unter 66 mm. Die Breite B beträgt weniger als 200 mm, vorzugsweise weniger als 184 mm und die gesamte Höhe H2 des Körpers 10 mit dem später beschriebenen Gelenk 50 beträgt vorzugsweise weniger als 84 mm und vorzugsweise weniger als 75 mm. Die Länge L des Körpers 10 ist variabel und liegt vorzugsweise in einem Bereich von 300-400 mm. Die gesamte Länge des Einbautoasters mit Gelenk liegt, vorzugsweise in einem Bereich von 330-420 mm.

Das in den Figuren dargestellte Gelenk 50 setzt sich aus einer Basis 53 und zwei Gelenkarmen 51 und 52 zusammen. Die Basis 53 wird dabei aus einem im Querschnitt L-förmigen Teil gebildet. Der im Einbauzustand horizontal liegende Abschnitt der L-förmigen Basis 53 wird einerseits unter ein erstes in einem Schubkasten über eine Schraubverbindung zu befestigendes Element 62 geschoben. Auf der gegenüberliegenden Seite umfasst er einen weiteren Schenkel 66, der im Einbauzustand vertikal nach oben weist. Dieser nach oben weisende Schenkel 66 ist im eingebauten Zustand durch eine Rastnase 64 eines Rasthebels 65 gehalten, der bei der dargestellten Ausführungsform integral mit einem zweiten Befestigungselement 63 ausgebildet ist, das ebenfalls über Schraubverbindungen in einem Schubladen zu montieren ist. Durch Verschwenken des Rasthebels 65 kann die Rastnase 64 außer Eingriff mit dem Schenkel 66 gebracht werden, um den Körper 10 mit dem Gelenk 50 zu lösen und aus dem nicht dargestellten Schubkasten entfernen zu können. Dies ist insbesondere zum Reinigen des Schubkastens notwendig. Beim Einsetzen wird der horizontale Abschnitt unter die Nase des ersten Befestigungselements 62 geschoben und dann durch eine kleine Schwenkbewegung der vertikale Abschnitt 66 mit der Rastnase 64 unter gleichzeitigem Wegdrücken des Hebels 65 und folgendem Zurückfedern des Hebels 65 verrastet. Die Erfindung ist selbstverständlich nicht auf diese Art einer Verrastung beschränkt. Vielmehr können auch andere Rastelemente und damit Verrastungen zum Einsatz kommen, insbesondere solche, die ohne den Einsatz von Werkzeugen lösbar sind.

Mit dem vertikal verlaufenden Abschnitt der Basis 53 sind um zwei Schwenkpunkte 54 und 56 verschwenkbar die beiden Schwenkarme 51 und 52 befestigt. Der erste Schwenkarm ist darüber hinaus andererseits um ein Schwenkpunkt 55 verschwenkbar mit dem Körper 10, hier dem Strangpressprofil 13, verbunden. Zwischen dem Schwenkpunkt und dem Schwenkpunkt 55 befindet sich eine Kröpfung 58, um einen notwendigen Abstand zwischen dem vertikalen Abschnitt der Basis 53 und dem Körper 10 zu schaffen. Darüber hinaus weist der erste Gelenkarm 51 im Bereich der Anbindung an das Gehäuse 10 einen Vorsprung 60 auf, der zu dem zweiten Schwenkarm 52 hin vorragt. Der zweite Schwenkarm 52 ist gleichfalls andererseits verdrehbar an einem Schwenkpunkt 57 mit dem Gehäuse 10 verbunden. Auch er weist eine Kröpfung 59 entsprechend der Kröpfung 58 auf. Darüber hinaus ist in dem Schwenkarm 52 eine Aussparung 61 vorgesehen, in die in der stehenden Position (Fig. 3) der Vorsprung 61 des ersten Gelenkarms 51 greift. Wie es aus Fig. 1 ersichtlich ist, ist der Vorsprung 60 durch einen Materialfortsatz gebildet, der an seinem dem zweiten Gelenkarm 52 zugewandten Ende ebenfalls L-förmig ausgebildet ist. Die Fläche des Schenkels des L-förmigen Vorsprungs 60, die der Aussparung 61 zugewandt ist, ist mit einem Permanentmagneten versehen. Im Bereich der Aussparung 61 ist ein entsprechendes Gegenstück aus ferritischem Material, d. h. magnetischem Material, vorgesehen. In der in Fig. 3 dargestellten stehenden Position des Körpers 10 kommt der Permanentmagnet mit dem Gegenstück in Kontakt. Um den Körper 10 wieder in die liegende Position zu verschwenken, muss die Anziehungskraft zwischen dem Permanentmagneten und dem Gegenstück zunächst überwunden werden, was jedoch durch einen geringen Kraftaufwand gelingt.

Im Folgenden wird die Schwenkbewegung des Körpers 10 aus der in den Fig. 1 und 2 dargestellten liegenden Position in die in Fig. 3 dargestellte stehende Position erläutert.

Zum Verschwenken aus der in Fig. 1 dargestellten liegenden in der in Fig. 3 dargestellte stehende Position greift ein Verwender den Körper 10, vorzugsweise im Bereich des Deckels (in Fig. 1 rechter Hand), und zieht diesen nach oben. Dabei verschwenkt der Körper 10 um die Gelenkpunkte 55 und 57, wobei die Gelenkarme 51, 52 bei dem in Fig. 1 vorderen Gelenk im Uhrzeigersinn um die Gelenkpunkte 54, 56 verschwenken. Während der Schwenkbewegung verschwenken die Gelenkarme 51, 52 über einen Totpunkt hinaus und gelangen in der in Fig. 3 dargestellten Stellung, in der der Vorsprung 60 mit der Aussparung 61 in Eingriff steht, ins Gleichgewicht, d. h. sie werden durch das Gewicht des Körpers 10 in der in Fig. 3 dargestellten Stellung gehalten. Ein zusätzliches Verriegeln oder Halten ist nicht erforderlich. Diese Stellung bietet dabei auch den Vorteil, dass bei einer Krafteinwirkung in den Figuren nach unten, z. B. beim Betätigen des Betätigungselements 43, der Körper 10 in der stehenden Position gehalten wird, ohne dass weitere Elemente erforderlich wären.

Um den Körper 10 wieder in die liegende Position zu bringen wird entsprechend in Fig. 3 ebenfalls eine Schwenkbewegung des Körpers 10 im Uhrzeigersinn ausgeführt. Dadurch verschwenkt der Körper wieder um die Schwenkpunkte 55, 57 und bewegt dadurch die Gelenkarme 51, 52 beim in Fig. 1 vorderen Gelenk entgegen dem Uhrzeigersinn, wodurch sich diese in die ursprüngliche Stellung den in Fig. 1 und 2 zurückbewegen.

Wie es aus Fig. 3 ersichtlich ist, wird durch diese Gelenkausgestaltung ermöglicht, dass der Toaster im Wesentlichen mittig in einem Schubfach positioniert werden kann und in der stehenden Position ebenfalls im Wesentlichen mittig in diesem steht. Darüber hinaus ist eine zusätzliche Verriegelung des Gelenks in der Betriebsposition (stehenden Position des Körpers 10) nicht erforderlich, was den Aufbau wie auch die Handhabung erheblich erleichtert.

Durch das vorsehen eines nicht dargestellten Sicherheitsschalters wird gewährleistest, dass selbst bei Betätigung des Betätigungselements 43 ein Röstbetrieb nur in der in Fig. 3 dargestellten stehenden Position des Körpers 10 ermöglicht wird. Weiter wird durch die vorgesehene Wärmeisolierung 17 sowie die Kühlkanäle 18 eine Erwärmung der Außenflächen des Körpers 10 ausgeschlossen oder weitgehend vermindert. Durch diese Merkmale wird ein effektiver Brandschutz gewährleistet, so dass selbst bei eingeschobenem Toaster oder aber bei unmittelbar nach dem Röstbetrieb zusammengeklappten Toaster und eingeschobenem Schubkasten das Entstehen eines Brands ausgeschlossen ist.

Durch die Ausgestaltung der Krumenaufnahme 30 ist ferner gewährleistet, dass diese sowohl in der liegenden als auch der stehenden Position aus dem Körper 10 entnommen werden kann, ohne dass Krumen aus der Aufnahme fallen.

Die rein beispielhafte Ausführungsform führt daher zu einem Einbautoaster, der einfachst aufgebaut und gut zu handhaben ist.

## Patentansprüche

1. Einbautoaster, insbesondere zum Einbau in einem Schubkasten, umfassend
einen flachen Körper (10) zum Aufnehmen und Rösten von Lebensmittelprodukten, insbesondere Brot, der im Querschnitt zwei gegenüberliegende lange Seiten (11) und zwei gegenüberliegende kurze Seiten (12) umfasst; **gekennzeichnet dadurch, daß**
ein Gelenk (50), das eine Verbindungsstelle zum Einbauen des Einbautoasters aufweist und derart mit dem Körper (10) verbunden ist, dass der Körper (10) zwischen einer liegenden Position, in der eine der langen Seiten (11) der Verbindungsstelle des Gelenks (50) zugewandt ist, und einer stehenden Position, in der eine der kurzen Seiten (12) der Verbindungsstelle des Gelenks (50) zugewandt ist, verschwenkbar ist.

2. Einbautoaster nach Anspruch 1, ferner umfassend einen Sicherheitsschalter, der einen Röstbetrieb nur in der stehenden Position gestattet.

3. Einbautoaster nach Anspruch 1 oder 2, ferner umfassend eine Krumenaufnahme (30), die in dem Körper (10) aufgenommen ist, an einer ersten Seite (32) eine Handhabe (31) zum Entnehmen der Krummenaufnahme aus dem Körper aufweist und eine sich von einer der ersten Seite (32) gegenüberliegenden zweiten Seite (34) in einem Abstand zu einem Boden (33) in Richtung der ersten Seite erstreckende Wand (35) umfasst.

4. Einbautoaster nach einem der vorstehenden Ansprüche, bei dem in dem Körper (10) wenigstens ein Kühlkanal (18) vorgesehen ist, der sich in der stehenden Position des Körpers im Wesentlichen vertikal erstreckt.

5. Einbautoaster nach einem der vorstehenden Ansprüche, bei dem das Gelenk (50) zwei Gelenkarme (51, 52) umfasst, die einerseits an einer die Verbindungsstelle bildenden Basis (53) und andererseits an dem Körper (10) angelenkt sind.

6. Einbautoaster nach Anspruch 5, bei dem die Anlenkstelle (55) eines ersten Gelenkarms (51) am Körper (10) in der liegenden Position weiter entfernt von der Verbindungsstelle liegt als die Anlenkstelle (57) eines zweiten Gelenkarms (52) am Körper (10) und der die Anlenkstelle (55) des ersten Gelenkarms (51) am Körper in der stehende Position näher zur Verbindungsstelle liegt als die Anlenkstelle (57) des zweiten Gelenkarms (52) am Körper.

7. Einbautoaster nach einem der Ansprüche 5 oder 6, bei dem die Gelenkarme (51, 52) in der stehenden Position verbunden sind und durch Aufbringung einer Kraft in Richtung der liegenden Position voneinander lösbar sind.

8. Einbautoaster nach einem der Ansprüche 5 bis 7, bei dem einer der Gelenkarme (51) einen Vorsprung (60) und der andere (52) eine Aussparung (61) aufweist und der Vorsprung in der stehenden Position des Körpers in die Aussparung greift.

9. Einbautoaster nach einem der vorstehenden Ansprüche, ferner umfassend wenigstens ein Betätigungselement (41, 43, 47), wobei das Betätigungselement, derart in einer Aussparung (42, 44, 46) des Köpers (10) aufgenommen ist, dass das Betätigungselement im Wesentlichen innerhalb der Seiten des Körpers liegt.

10. Einbautoaster nach Anspruch 9, bei dem alle Betätigungselemente (41, 43, 47) so angeordnet sind, dass sie im Wesentlichen innerhalb der Seiten des Körpers (10) liegen.

## Claims

1. Built-in toaster, in particular for installation in a drawer, comprising a flat body (10) for receiving and toasting foodstuff products, in particular bread, which comprises in cross-section two opposing long sides (11) and two opposing short sides (12); **characterised in that** a hinge (50) which has a connecting point for installation of the built-in toaster and is connected to the body (10) such that the body (10) can be pivoted between a horizontal position, in which one of the long sides (11) is facing the connecting point of the hinge (50), and an upright position, in which one of the short sides (12) is facing the connecting point of the hinge (50).

2. Built-in toaster according to claim 1, further comprising a safety switch which permits toasting operation only in the upright position.

3. Built-in toaster according to claim 1 or 2, further comprising a crumb receiver (30) which is accommodated in the body (10), on a first side (32) has a handle (31) for removing the crumb receiver from the body and comprises a wall (35) extending from a second side (34) opposite the first side (32) at a distance from a base (33) in the direction of the first side.

4. Built-in toaster according to one of the above claims, in which at least one cooling channel (18), which extends essentially vertically in the upright position of the body, is provided in the body (10).

5. Built-in toaster according to one of the above claims, in which the hinge (50) comprises two hinge arms (51, 52), which are coupled on the one side to a base (53) forming the connecting point and on the other side to the body (10).

6. Built-in toaster according to claim 5, in which the coupling point (55) of a first hinge arm (51) on the body (10) in the horizontal position lies further away from the connecting point than the coupling point (57) of a second hinge arm (52) on the body (10) and the coupling point (55) of the first hinge arm (51) on the body in the upright position lies closer to the connecting point than the coupling point (57) of the second hinge arm (52) on the body.

7. Built-in toaster according to one of claims or 6, in which the hinge arms (51, 52) are connected in the upright position and can be released from one another by application of a force in the direction of the horizontal position.

8. Built-in toaster according to one of claims 5 to 7, in which one of the hinge arms (51) has a projection (60) and the other (52) a recess (61) and the projection engages in the recess in the upright position of the body.

9. Built-in toaster according to one of the above claims, further comprising at least one actuating element (41, 43, 47), wherein the actuating element is accommodated in a recess (42, 44, 46) of the body (10) such that the actuating element lies essentially within the sides of the body.

10. Built-in toaster according to claim 9, in which all actuating elements (41, 43, 47) are arranged so that they lie essentially within the sides of the body (10).

## Revendications

1. Grille-pain intégré, en particulier pour l'intégration dans un tiroir, comprenant un corps (10) plan, qui, destiné à recevoir et griller des produits alimentaires, en particulier du pain, est doté, en section transversale, de deux faces latérales longues (11) opposées, et de deux faces latérales courtes (12) opposées, **caractérisé en ce qu'**une articulation (50), qui présente un point de raccordement pour le montage du grille-pain incorporé, et qui est reliée au corps (10) de sorte que ledit corps (10) puisse être pivoté entre une position couchée, dans laquelle l'une des faces latérales longues (11) est orientée vers le point de raccordement de l'articulation (50), et une position debout, dans laquelle l'une des faces latérales courtes (12) est orientées vers le point de raccordement de l'articulation (50).

2. Grille-pain intégré selon la revendication 1, qui comprend en outre un commutateur de sécurité, qui ne permet une opération de grillage que dans la position debout.

3. Grille-pain intégré selon revendication 1 ou 2, qui,est doté en outre d'un collecteur de miettes (30), qui est logé dans le corps (10), qui comprend, sur une première face latérale (32), un organe de manipulation (31) pour retirer le collecteur de miettes du corps, et une paroi (35), qui s'étend, en direction de la première face latérale (32), à distance d'un fond (33), à partir d'une deuxième face latérale (34), opposée à la première face latérale (32).

4. Grille-pain intégré selon l'une des revendications précédentes, dans lequel est prévu au moins un canal de refroidissement (18), qui s'étend sensiblement verticalement quand le corps (10) est en position debout.

5. Grille-pain intégré selon l'une des revendications précédentes, dans lequel l'articulation (50) comprend deux bras articulés (51, 52), qui sont articulés, d'une part, sur une base formant le point de raccordement, et, d'autre part, sur le corps (10).

6. Grille-pain intégré selon la revendication 5, dans lequel le point d'articulation (55) sur le corps (10) d'un premier bras articulé (51) est plus éloigné, dans la position couchée, du point de raccordement que le point d'articulation (57) sur le corps (10) d'un deuxième bras articulé (52), et le point d'articulation (55) sur le corps (10) du premier bras articulé (51) est plus proche, dans la position debout, du point de raccordement que le point d'articulation (57) sur le corps du deuxième bras articulé (52).

7. Grille-pain intégré selon l'une des revendications 5 ou 6, dans lequel les bras articulés (51, 52) sont reliés ensemble dans la position debout et peuvent être détachés par application d'une force en direction de la position couchée.

8. Grille-pain intégré selon l'une des revendications 5 à 7, dans lequel l'un (51) des bras articulés présente une saillie (60) et l'autre (52) présente une cavité (61), la saillie s'engageant dans la cavité quand le corps est en position debout.

9. Grille-pain intégré selon l'une des revendications précédentes, qui comprend en outre au moins un élément d'actionnement (41, 43, 47), sachant que l'élément d'actionnement est reçu dans une cavité (42, 44, 46) du corps (10), que ledit élément d'actionnement se trouve sensiblement dans les faces latérales du corps.

10. Grille-pain intégré selon la revendication 9, dans lequel tous les éléments d'actionnement (41, 43, 47) sont disposés de sorte qu'ils se trouvent sensiblement dans les faces latérales du corps (10).
